# EUROPÄISCHE PATENTSCHRIFT

(11) **EP 2 486 550 B1**
(45) Veröffentlichungstag und Bekanntmachung des Hinweises auf die Patenterteilung: **15.03.2017**
(21) Anmeldenummer: 10768198.3
(22) Anmeldetag: 30.09.2010
(51) Int. Cl.: G07C 9/00

(54) **DOKUMENT**
DOCUMENT
DOCUMENT

(30) Priorität: 09.10.2009 DE 102009045544
(43) Veröffentlichungstag der Anmeldung: 15.08.2012
(73) Patentinhaber: Bundesdruckerei GmbH, 10958 Berlin (DE)
(72) Erfinder: HAMANN, Ulrich, 12005 Berlin (DE); PAESCHKE, Manfred, 16352 Basdorf (DE); FISCHER, Joerg, 13053 Berlin (DE); KLOESER, Joachim, 10779 Berlin (DE)
(74) Vertreter: Richardt Patentanwälte PartG mbB
(86) Internationale Anmeldenummer: PCT/EP2010/064526
(87) Internationale Veröffentlichungsnummer: WO 2011/042349

(56) Entgegenhaltungen:
- EP-A1- 1 420 359
- WO-A1-03/017194
- WO-A1-2009/097604
- WO-A2-2006/069158
- DE-A1-102007 050 480
- GB-A- 2 420 098
- US-A1- 2002 148 900
- US-A1- 2005 211 784
- US-A1- 2006 131 393
- US-A1- 2008 067 247
- US-A1- 2009 145 972
- US-B1- 6 728 881

## Beschreibung

Die vorliegende Erfindung betrifft ein Dokument, insbesondere ein Wert- oder Sicherheitsdokument, beispielsweise ein Ausweisdokument. Aus dem Stand der Technik sind bereits verschiedene Dokumente bekannt, die eine integrierte elektronische Schaltung, beispielsweise einen so genannten RFID-Chip beinhalten, wie zum Beispiel aus DE10 2005 025 806.9.

US 2009/0145972 A1 zeigt eine Kreditkarte, auf deren Vorderseite und Rückseite ein biometrischer Sensor angeordnet ist, um so einen Nutzer biometrisch zu authentifizieren.

WO 2006/069158 A2 offenbart verschiedene Techniken bezüglich einer Zweifaktorauthentifizierung mithilfe biometrischer Daten, wie sie in einer serverbasierten Lösung umgesetzt werden.

DE 2007 050 480 A1 zeigt ein Dokument mit einer Anzeigevorrichtung und mit einem maschinenlesbaren Aufdruck, dessen Erfassung durch ein Lesegerät eine Voraussetzung für eine erfolgreiche Durchführung eines kryptografischen Protokolls ist.

US 2002/0148900 A1 zeigt ein Lesegerät für einen optischen Code mit holografischen optischen Elementen.

Der Erfindung liegt dem gegenüber die Aufgabe zugrunde ein verbessertes Dokument zu schaffen.

Die Erfindung zugrunde liegende Aufgrabe wird mit den Merkmalen des Patentanspruchs 1 gelöst. Ausführungsformen der Erfindung sind in den abhängigen Patentansprüchen angegeben.

Nach Ausführungsformen der Erfindung handelt es sich bei dem Dokument um ein Wert- oder Sicherheitsdokument, wie zum Beispiel ein ID-Dokument, d. h. ein Ausweisdokument, wie zum Beispiel einen Personalausweis, Reisepass, Führerschein oder Firmenausweis, oder ein Zahlungsmittel, wie zum Beispiel eine Banknote, eine Kreditkarte, oder einen sonstigen Berechtigungsnachweis, wie zum Beispiel eine Eintrittskarte, einen Frachtbrief, ein Visum oder dergleichen. Das Dokument kann papier- und/oder kunststoffbasiert ausgebildet sein. Insbesondere kann das Dokument buchartig oder kartenförmig ausgebildet sein. Ferner kann es sich bei dem Dokument um eine Chipkarte handeln.

Nach Ausführungsformen der Erfindung hat das Dokument einen Dokumentenkörper, der durch mehrere übereinander angeordnete Dokumentschichten gebildet wird. Die einzelnen Dokumentenschichten können aus Kunststoff bestehen oder aus Papier. Beispielsweise haben die einzelnen Dokumentschichten jeweils in etwa die gleiche Form und Größe, sodass sie übereinander geschichtet einen z. B. kartenförmigen Dokumentenkörper bilden. Hierzu können die Dokumentenschichten aufeinander laminiert sein.

Eine erste der Dokumentenschichten beinhaltet eine Auswerteeinheit. Hierbei kann es sich um eine Halbleiterschaltung handeln, die z. B. siliziumbasiert oder polymerelektronisch ausgeführt ist. Beispielsweise kann die Auswerteeinheit durch einen Chip implementiert werden, der sich auf oder in der ersten Dokumentenschicht befindet. Die Auswerteeinheit kann auch aus polymerelektronischen Komponenten gebildet werden, die z. B. drucktechnisch auf die ersten Dokumentenschicht aufgebracht werden.

Eine zweite der Dokumentenschichten beinhaltet eine erste Erfassungseinheit zur Erfassung erster biometrischer Daten und eine dritte der Dokumentenschichten eine zweite Erfassungseinheit zur Erfassung von zweiten biometrischen Daten.

Die Auswerteeinheit ist zur Durchführung eines so genannten Match on Card Verfahrens ausgebildet. Hierzu hat das Dokument einen ersten Speicherbereich zur Speicherung erster Referenzdaten für die ersten biometrischen Daten und einen zweiten Speicherbereich zur Speicherung zweiter Referenzdaten für die zweiten biometrischen Daten. Die ersten Referenzdaten dienen zur Durchführung eines Match on Card Verfahrens hinsichtlich der ersten biometrischen Daten und die zweiten Referenzdaten dienen zur Durchführung eines Match on Card Verfahrens für die zweiten biometrischen Daten, wobei das Match on Card Verfahren jeweils durch die Auswerteeinheit durchgeführt wird.

Die Auswerteeinheit ist so ausgebildet, dass das Ergebnis des Match on Card Verfahrens bzgl. der ersten Referenzdaten und der ersten biometrischen Daten ein erster Konfidenz-Wert, d. h. ein so genannter Confidence-Value, ist und dass das Ergebnis der Durchführung des Match on Card Verfahren bzgl. der zweiten Referenzdaten und der zweiten biometrischen Daten eine zweiter Konfidenz-Wert ist. Diese ersten und zweiten Konfidenz-Werte können durch die Auswerteeinheit weiter verarbeitet werden, beispielsweise zur Prüfung einer Nutzungsberechtigung eines Nutzers. Die Auswerteeinheit ist so ausgebildet, dass die Funktion des Dokuments frei geschaltet wird, wenn zumindest einer der ersten und zweiten Konfidenz-Werte über einen ersten Schwetlwert liegt. Die Auswerteeinheit kann ferner so ausgebildet sein, dass wenn keiner der ersten und zweiten Konfidenz-Werte über den ersten Schwellwert liegt, geprüft wird, ob sowohl der erste und der zweite Konfidenz-Wert über einem zweiten Schwellwert liegen, wobei der zweite Schwellwert unterhalb des ersten Schwellwerts liegt. Wenn eine dieser Bedingungen erfüllt ist, d. h. wenn zumindest einer der ersten und zweiten Konfidenz-Werte über den ersten Schwellwert liegt, oder wenn sowohl der erste als auch der zweite Konfidzenz-Wert über dem zweiten Schwellwert liegen, so gilt der Nutzer als identifiziert und zur Nutzung der Funktion des Dokuments autorisiert, sodass diese frei geschaltet wird.

Die Auswerteeinheit ist des Weiteren so ausgebildet, dass die Funktion frei geschaltet wird, wenn das Ergebnis einer Rechenoperation, in die die ersten und zweiten Konfidenz-Werte eingehen, über dem zweiten Schwellwert liegt. Bei dieser Rechenoperation kann es sich um eine Linearkombination der ersten und zweiten Konfidenz-Werte handeln.

Bei der Funktion des Dokuments kann es sich um eine beliebige Chipkartenfunktion handeln, wie z. B. eine kryptographische Funktion zur Entschlüsselung und/oder Verschlüsselung von Daten, insbesondere eine Funktion zur Generierung einer elektronischen Signatur, eine Bezahlfunktion, eine Datenspeicherungs- oder Datenlesefunktion zum Zugriff auf einen elektronischen Speicher des Dokuments oder eine andere Funktion zur Verfügungsstellung einer digitalen Identität des Nutzers des Dokuments, beispielsweise in einem Netzwerk, insbesondere dem Internet. Bei den ersten und zweiten biometrischen Daten kann es sich um unterschiedliche Typen biometrischer Daten handeln, wie z. B. um Fingerabdruckdaten, Irisscanndaten, Gesichtsbiometriedaten, genetische Daten, insbesondere DNA-Sequenz-Daten. Beispielsweise kann die erste oder die zweite Erfassungseinheit als Fingerabdrucksensor zur Erfassung von Fingerabdruckdaten eines Benutzers ausgebildet sein oder als elektronische Kamera zur Erfassung von Irisscandaten oder Gesichtsbiometriedaten. Beispielsweise kann die erste oder die zweite Erfassungseinheit als ein Mikrosystem zur Durchführung einer DNA-Sequenzierung der DNA eines Nutzers ausgebildet sein, insbesondere als ein so genanntes DNA-Mikro-Totalanalysis-System (TAS) mit z. B. subkutaner Probenentnahme, wobei mit Hilfe einer von dem Nutzer entnommenen Probe die DNA-Sequenzierung durchgeführt wird, welche dann die biometrischen Daten liefert.

Nach einer Ausführungsform der Erfindung hat das Dokument einen elektronischen Speicher zur Speicherung von schutzbedürftigen Daten und einer z. B. optischen und/oder drahtlosen oder kontaktbehafteten Schnittstelle zur Ausgabe der schutzbedürftigen Daten. Bei der Funktion des Dokuments handelt es sich hier um die Durchführung eines Lesezugriffs auf die schutzbedürftigen Daten und deren Ausgabe über die Schnittstelle, wobei die Auswerteeinheit zur Durchführung eines kryptographischen Verfahrens zum Schutz der schutzbedürftigen Daten ausgebildet ist, wobei eine notwendige Bedingung zur Ausgabe der schutzbedürftigen Daten über die Schnittstelle ist, dass die ersten und zweiten biometrischen Daten ein durch die Auswertung zu überprüfendes vorgegebenes Kriterium erfüllen.

Beispielsweise kann die Auswerteeinheit zur Durchführung eines so genannten Basic-Access-Control (BAC)-Verfahrens und/oder eines Extended-Access-Control (EAC)-Verfahrens ausgebildet sein, wobei solche Verfahren von internationalen Luftfahrtbehörde (ICAO) standardisiert sind.

Nach einer Ausführungsform der Erfindung beinhaltet eine vierte der Dokumentenschichten eine Anzeigevorrichtung, die mit der Auswerteeinheit verbunden ist, sodass die Auswerteeinheit die Anzeigevorrichtung ansteuern kann. Eine Treiberschaltung für die Anzeigevorrichtung kann dabei als Teil der Auswerteeinheit oder als Teil der Anzeigevorrichtung selbst oder als separate Schaltung auf einer weiteren Dokumentenschicht implementiert sein.

Die Anzeigevorrichtung kann so ausgebildet sein, dass Bilddaten auch ohne ständige Energieversorgung wiedergeben können. Solche Anzeigen benötigen nur dann elektrische Energie, wenn sich die wiederzugebenden Bilddaten ändern. Hierbei handelt es sich beispielsweise um bistabile Anzeigen, wie zum Beispiel elektrophoretische Anzeigen, elektrochrome Anzeigen, Drehelementanzeigen, ferroelektrische Anzeigen, Anzeigen auf der Basis des Elektrowetting-Effekts sowie bistabile LCD-Anzeigen, zum Beispiel twisted nematic, super twisted nematic, cholesterische oder nematische LCD-Anzeigen. Dabei kann es sich ferner auch um Hybridanzeigen handeln, die verschiedene dieser Anzeigetechnologien miteinander kombinieren. Ferner kann es sich bei der Anzeigevorrichtung um eine flexible, bistabile Anzeige handeln, beispielsweise wie an sich aus US 2006/0250534 A1 bekannt. Weitere bistabile elektrophoretische Anzeigen sind beispielsweise aus WO 99/53371 und EP 1 715 374 A1 bekannt.

Bistabile Anzeigen werden auch als "Electronic Paper Display" (EPD) bezeichnet.

Solchen bistabilen Anzeigen haben im Allgemeinen den Vorteil, dass sie sich bei heller Beleuchtung sehr gut lesen lassen, und dass keine Energieversorgung erforderlich ist, um über lange Zeit gleich bleibende Bilddaten wiederzugeben.

Bei der Anzeigevorrichtung kann es sich auch um eine emissive Anzeige handeln, wie zum Beispiel eine LED-Anzeige, insbesondere eine anorganisch, organisch oder Hybrid-LED-Anzeige. Solche Anzeigen können auf der Basis von Dünnfilmtransistoren (Thin-film Transistors - TFTs) realisiert sein, insbesondere transparenten TFTs, wie sie zum Beispiel aus P. Görrn, P. Hölzer, T. Riedl, W. Kowalsky, J. Wang, T. Weimann, P. Hinze, and S. Kipp: Stability of transparent zinc tin oxide transistors under bias stress, Appl. Phys. Lett. 90, 063502 (2007); Proceedings of SPIE -- Volume 6486; Light-Emitting Diodes: Research, Manufacturing, and Applications XI, Klaus P. Streubel, Heonsu Jeon, Editors, 64860F (Feb. 13, 2007) und Thin-film transistors with transparent amorphous zinc indium tin oxide channel layer, M. S. Grover et al, 2007, J. Phys. D: Appl. Phys. 40 1335-1338, bekannt sind.

Die Herstellung von TFTs durch direktes Aufbringen mit Hilfe von Drucktechnik ist an sich bekannt aus WO 03/098696 A1.

Eine emissive Anzeigevorrichtung kann auch auf der Basis eines elektrolumineszierenden Mediums realisiert sein, wie es zum Beispiel aus US 2002/0079494 A1 und US 6,091,194 bekannt ist. Bei emissiven Anzeigen ist von Vorteil, dass sie ohne Beleuchtung lesbar sind und dass eine Farbwiedergabe leicht realisierbar ist. Sowohl bistabile als auch emissive Anzeigen können als Segment-Anzeigen, Passiv- oder Aktivmatrix ausgebildet sein, vergleiche hierzu US 2006/0240603 A1.

Sowohl bistabile als auch emissive Anzeigen sind in reflektiven und transparenten Ausführungsformen herstellbar, wie es an sich aus dem Stand der Technik bekannt ist.

Das Dokument kann eine oder mehrere gleichartiger oder unterschiedlicher Anzeigevorrichtungen auf der selben oder unterschiedlichen Dokumentenschichten aufweisen. Beispielsweise kann das Dokument eine emissive Anzeigevorrichtung aufweisen, auf der nur dann eine Bildwiedergabe erfolgt, wenn in das Dokument z. B. Induktivenergie eingekoppelt wird. Das Dokument kann auf der selben oder einer anderen Dokumentenschicht eine bistabile Anzeigevorrichtung aufweisen, auf der permanent und unabhängig von der Einkopplung von elektrischer Energie eine Wiedergabe erfolgt.

Nach einer Ausführungsform der Erfindung erfolgt die Ausgabe zumindest eines Teils der schutzbedürftigen Daten über die Anzeigevorrichtung des Dokuments, wobei die optische Ausgabe der Daten im Klartext oder in einer visuell und/oder kognitiv nicht durch einen Nutzer erfassbaren Form erfolgt, beispielsweise durch Senden eines optischen maschinenlesbaren Signals durch die Anzeigevorrichtung.

Nach einer Ausführungsform der Erfindung hat das Dokument eine Dokumentenschicht mit einem Volumenhologramm. Bevorzugt kann das Volumenhologramm steuerbare optische Linsen-Elemente beinhalten. Das Volumenhologramm mit den steuerbaren Linsen-Elementen kann in einem Strahlengang der elektronischen Kamera des Dokuments angeordnet sein, wobei das Volumenhologramm bzw. dessen steuerbare optischen Linsen-Elemente von der Auswerteeinheit ansteuerbar sind, um z. B. je nach Ansteuerung eine Nahaufnahme z. B. zur Aufnahme der Fingerabdrücke oder einer Portraitaufnahme zur Erfassung der Gesichtsbiometriedaten zu ermöglichen.

Nach einer weiteren Ausführungsform beinhaltet zumindest eine der Dokumentenschichten ein optisches Sicherheitsmerkmal, was z. B. drucktechnisch Mittels Tiefdruck, insbesondere Stichtiefdruck und Rastertiefdruck, Siebdruck, Off-Setdruck, Hochdruck (Letterset), insbesondere indirekter Hochdruck, oder durch Personalisierungsverfahren, wie z. B. Thermotransferdruck, Tintenstrahldruck oder Laserpersonalisierung aufgebracht worden sein kann.

Insbesondere kann das Dokument ein oder mehrere der folgenden optischen Sicherheitsmerkmale aufweisen:
- Guillochen: Guillochen werden mit Hilfe von so genanntem Liniendruck auf das Dokument aufgedruckt. Sie bestehen im Allgemeinen aus in verschiedenen Farben übereinander gedruckten Wellen- und Schleifenmustern;
- Mikro-Schrift: Hierbei handelt es sich um aufgedruckte Schriftzüge in kleinster Schrift. Mit bloßem Auge lässt sich die Mikro-Schrift kaum erkennen. Beispielsweise ist Mikro-Schrift auf den Euro-Banknoten als Bildelement in die Motive eingearbeitet. Mit Hilfe einer Lupe kann die Mikro-Schrift gelesen werden;
- Metamere Systeme: Aufgrund metamerer Farbgleichheit können unterschiedliche spektrale Zusammensetzungen des Lichts bei Menschen den gleichen Farbeindruck hervorrufen und zum Beispiel mittels Farbfiltern oder variablen Beleuchtungsquellen optisch wahrnehmbar gemacht werden;
- Aufdrucke mit Fluoreszenz-, Phosphoreszenz- und/oder Up-Conversion-Farben;
- Aufdrucke mit Infrarot-Farbe: Die Farbe wird nur unter Infrarot-Strahlung für Lesegeräte mit entsprechenden Sensoren detektierbar. Beispielsweise sind Euro-Banknoten mit diesem optischen Sicherheitsmerkmal ausgestattet;
- Barcodes, insbesondere ein- oder zweidimensionale Barcodes, monochrom oder mehrfarbig;
- Optisch variable Farben (OVI - Optical Variable Ink): Bei einer optisch variablen Farbe ändert sich der Farbeindruck je nach Betrachtungswinkel, da das Licht an den Pigmenten gebrochen, gestreut oder reflektiert wird;
- Hologramme und Kinegrame (transparent oder reflektierend);
- Wasserzeichen;
- digitale Wasserzeichen, die eine sichtbare und/oder maschinell auslesbare Information tragen;
- Passerdruck: Verschiedene Muster oder Symbole werden so über- oder aneinander gedruckt, dass sie zusammen ein bestimmtes Bild ergeben. Kleinste Abweichungen im Stand, d.h. so genannte Passerungenauigkeiten, können leicht mit bloßem Auge erkannt werden. Wenn sich die Teilbilder auf verschiedenen Seiten des Dokuments, wie zum Beispiel einer Banknote, befinden, bezeichnet man dieses optische Sicherheitsmerkmal als Durchsichtspasser;
- Durchsichtsfenster: Ein Fenster aus einer transparenten Kunststofffolie ist in dem Dokument eingearbeitet;
- Melierfasern: Dem Papier des Dokuments werden Fasern beigemischt, die unter UV-Licht in verschiedenen Farben leuchten;
- Sicherheitsfaden;
- Mikroperforation.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments in Explosionsdarstellung,
- Figur 2: eine Seitenansicht des Dokuments gemäß Figur 1,
- Figur 3: eine weitere Ausführungsform eines erfindungsgemäßen Dokuments in Explosionsdarstellung.

Elemente der nachfolgenden Ausführungsformen, die einander entsprechen, werden jeweils mit den selben Bezugszeichen gekennzeichnet.

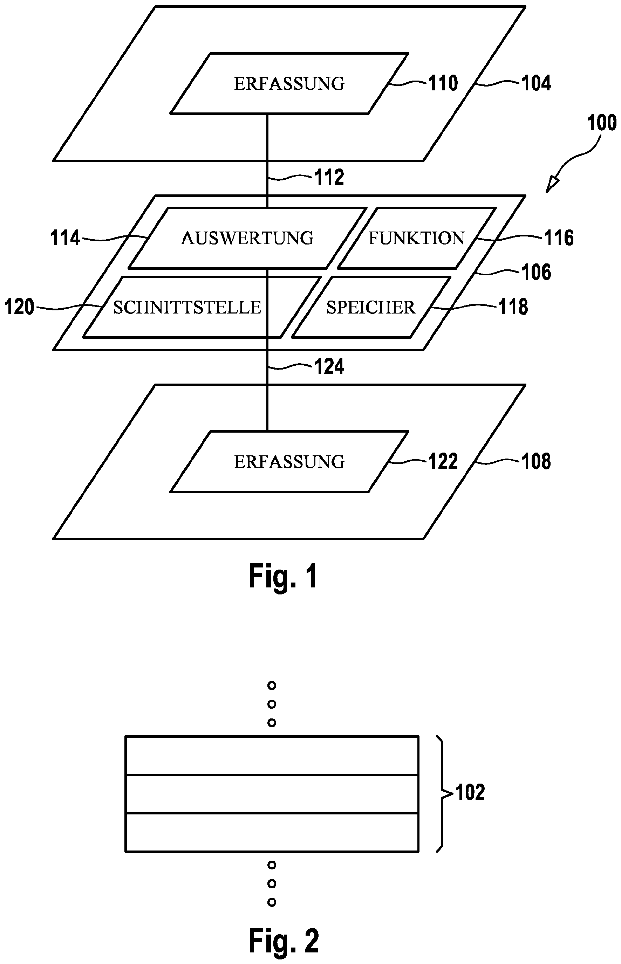

Die Figur 1 zeigt eine Ausführungsform eines erfindungsgemäßen Dokuments 100 in Explosionsdarstellung. Bei der hier betrachten Ausführungsform hat das Dokument 100 einen Dokumentenkörper 102 (vergleiche Figur 2), der durch zumindest 3 Dokumentenschichten des Dokuments 100 gebildet wird, nämlich durch die Dokumentenschichten 104, 106 und 108.

Die Dokumentschicht 104 beinhaltet eine Erfassungseinheit 110 zur Erfassung erster biometrischer Daten. Beispielsweise handelt es sich bei der Erfassungseinheit 110 um ein Mikrosystem zur Durchführung einer DNA-Sequenzierung, wobei das Mikrosystem zur Durchführung einer Probenentnahme von einem Nutzer ausgebildet ist, insbesondere zur subkutanen Probenentnahme. Insbesondere kann die Erfassungseinheit 110 als so genanntes DNA-Mikro-Totalanalysis-System (TAS) ausgebildet sein. Bei den von der Erfassungseinheit 110 erfassten biometrischen Daten handelt es sich dann um eine DNA-Sequenz eines Nutzers des Dokuments 100, von den die Probe entnommen worden ist.

Die Erfassungseinheit 110 ist mit einer elektronischen Schaltung des Dokuments 100, die sich auf der Dokumentenschicht 106 befindet, verbunden und zwar beispielsweise über ein so genanntes Via 112, welches in vertikaler Richtung durch den Dokumentenkörper 102 hindurch verläuft. Über das Via werden die von der Erfassungseinheit 110 erfassten biometrischen Daten zu einem Auswertungsmodul 114 der elektronischen Schaltung übertragen, damit sie dort ausgewertet werden. Die elektronische Schaltung der Dokumentenschicht 106 hat ferner eine Funktionsmodul 116 zur Ausführung einer Funktion des Dokuments 100, wobei eine Voraussetzung für die Ausführung der Funktion ist, dass das Funktionsmodul 116 von dem Auswertungsmodul 114 frei geschaltet ist.

Die elektronische Schaltung der Dokumentenschicht 106 hat ferner zumindest einen elektronischen Speicher 118 und eine Kommunikationsschnittstelle 120.

Das Auswertungsmodul 114, das Funktionsmodul 116, der Speicher 118 und die Kommunikationsschnittstelle 120 können abweichend von der Ausführungsform gemäß Figur 1 ganz oder teilweise auf verschiedenen Dokumentenschichten des Dokuments 100 angeordnet sein und zum Beispiel über weitere Vias miteinander kommunizieren.

Der Speicher 118 kann einen ersten Speicherbereich zur Speicherung erster Referenzdaten für die von der Erfassungseinheit 110 gelieferten biometrischen Daten sowie einen zweiten Speicherbereich zur Speicherung zweiter Referenzdaten für biometrische Daten, die eine Erfassungseinheit 122 liefert, aufweisen.

Bei der Kommunikationsschnittstelle 120 kann es sich um eine optische Schnittstelle, wie z. B. eine Leuchtdiode oder eine Anzeigevorrichtung, eine kontaktbehaftete Schnittstelle, wie z. B. eine kontaktbehaftete Chipkartenschnittstelle, eine kontaktlose Schnittstelle, wie z. B. eine RFID Schnittstelle oder eine so genannte Dualmode Schnittstelle, die sowohl eine kontaktbehaftete als auch eine kontaktlose Kommunikation zulässt, handeln.

Beispielsweise ist die Kommunikationsschnittstelle 120 zur Ausführung eines RFID-Kommunikationsverfahrens ausgebildet. Neben der Kommunikation z. B. mit einem externen Lesegerät (in den Figuren nicht gezeigt) kann die Kommunikationsschnittstelle 120 dann auch zur Einkopplung von elektrischer Energie in das Dokument 100 dienen, insbesondere zur induktiven Einkopplung über ein Nahfeld, um die elektronische Schaltung des Dokuments und deren weiteren aktiven Komponenten, wie z. B. die Erfassungseinheiten 110 und 122, mit elektrischer Energie zu versorgen.

Die Erfassungseinheit 122 befindet sich auf der Dokumentschicht 108 und ist mit dem Auswertungsmodul 114 über ein Via 124 verbunden, über welches die Erfassungseinheit 122 biometrische Daten in das Auswertungsmodul 114 eingibt, damit diese biometrischen Daten dort ausgewertet werden. Beispielsweise ist der Erfassungseinheit 122 als elektronische Kamera, insbesondere als Charge-Coupled-Device (CCD) Array oder als Active Pixel Sensor (APS), der in CMOS-Technik gefertigt ist, ausgebildet, um ein oder mehrere biometrische Merkmale von einem Nutzer des Dokuments 100 zu erfassen, wie z. B. Gesichtsbiometriedaten.

Das Auswertungsmodul 114 ist dazu ausgebildet, die von den Erfassungseinheiten 110 und 122 gelieferten biometrischen Daten auszuwerten, um in Abhängigkeit eines Ergebnisses dieser Auswertung das Funktionsmodul 116 frei zu schalten. Die Freischaltung kann dadurch erfolgen, dass das Auswertungsmodul 114 ein Freigabesignal generiert, wenn das Ergebnis der Auswertung der biometrischen Daten ein vorgegebenes Kriterium erfüllt, wobei durch das Freigabesignal ein Schaltvorgang ausgelöst wird, welcher das Funktionsmodul 116 frei schaltet, sodass es seine Funktion erbringen kann.

Beispielsweise erfolgt die Auswertung der biometrischen Daten durch das Auswertungsmodul 114 so, dass für die von der Erfassungseinheit 110 gelieferten biometrischen Daten und für die von der Erfassungseinheit 122 gelieferten biometrischen Daten jeweils mit Hilfe der in dem Speicher 118 gespeicherten ersten und zweiten Referenzdaten ein Match-on-Card Verfahren durchgeführt wird, um zu prüfen, ob die erfassten biometrischen Daten mit den jeweiligen Referenzdaten hinreichend übereinstimmen. Dadurch wird für die von der Erfassungseinheit 110 gelieferten biometrischen Daten ein erster Konfidenz-Wert und für die von der Erfassungseinheit 122 gelieferten biometrischen Daten ein zweiter Konfidenz-Wert geliefert, wobei die Konfidenz-Werte jeweils eine Wahrscheinlichkeit dafür angeben, dass der Nutzer, von dem das jeweilige biometrische Merkmal erfasst worden ist, der selbe Nutzer ist, für den die betreffenden Referenzdaten in dem Speicher 118 gespeichert sind.

Das Auswertungsmodul kann so ausgebildet sein, dass das Freigabesignal für das Funktionsmodul 116 dann generiert wird, wenn zumindest einer der ersten und zweiten Konfidenz-Werte über einem ersten Schwellwert liegt. Das Auswertungsmodul 114 kann ferner so ausgebildet sein, dass wenn dies nicht der Fall ist, geprüft wird, ob sowohl der erste als auch der zweite Konfidenz-Wert über einem zweiten Schwellwert liegen, wobei der zweite Schwellwert unter dem ersten Schwellwert liegt. Beispielsweise kann der erste Schwellwert 99 % betragen und der zweite Schwellwert 80%.

Dies hat den Vorteil, dass auch dann eine Freischaltung des Funktionsmoduls 116 erfolgen kann, wenn beispielsweise temporär keine qualitativ hochwertige Erfassung eines der biometrischen Merkmale des Nutzers möglich ist. Dies kann beispielsweise dann der Fall sein, wenn die Erfassungseinheit 122 zur Erfassung der Fingerabdruckdaten ausgebildet ist und der Nutzer eine Verletzung an seinem Finger hat. Wenn in diesem Fall die von der Erfassungseinheit 110 gelieferten biometrischen Daten einen hohen Konfidenz-Wert ergeben, so kann der Nutzer dennoch das Dokument 100 nutzen.

Nach einer Ausführungsform der Erfindung sind in dem elektronischen Speicher 118 schutzbedürftige Daten gespeichert. Hierbei kann es sich z. B. um persönliche Angaben zu dem Nutzer des Dokuments handeln, wie z. B. Name, Adresse, Wohnort, Alter, Geschlecht, Nationalität. Ein Lesezugriff auf diese schutzbedürftige Daten darf nur dann erfolgen, wenn die dazu definierten Voraussetzungen erfüllt sind.

Eine notwendige Voraussetzung für einen solchen Lesezugriff und die Ausgabe der schutzbedürftigen Daten über die Schnittstelle 120 kann sein, dass die Auswertung der von den Erfassungseinheiten 110 und 122 gelierten biometrischen Daten Konfidenz-Werte ergeben, von denen zumindest einer über dem ersten Schwellwert liegt, oder wenn dies nicht der Fall ist, beide Konfidenz-Werte über den zweiten Schwellwert liegen. Wenn diese Bedingung erfüllt ist, generiert das Auswertungsmodul 114 ein Freigabesignal für das Funktionsmodul 116, welches daraufhin zumindest einen Teil der schutzbedürftigen Daten aus dem Speicher 118 ausliest und über die Schnittstelle 120 z. B. an ein externes Lesegerät ausgibt.

Weitere Bedingungen, die für die Ausgabe der schutzbedürftigen Daten erfüllt sein müssen, können z. B. die Durchführung eines BAC- und/ oder EAC-Verfahrens sein.

Die Figur 2 zeigt eine seitliche Ansicht des Dokuments 100 der Figur 1, wobei das Dokument 100 neben den drei gezeigten Dokumentenschichten 104, 106 und 108 noch weiter Dokumentenschichten aufweisen kann.

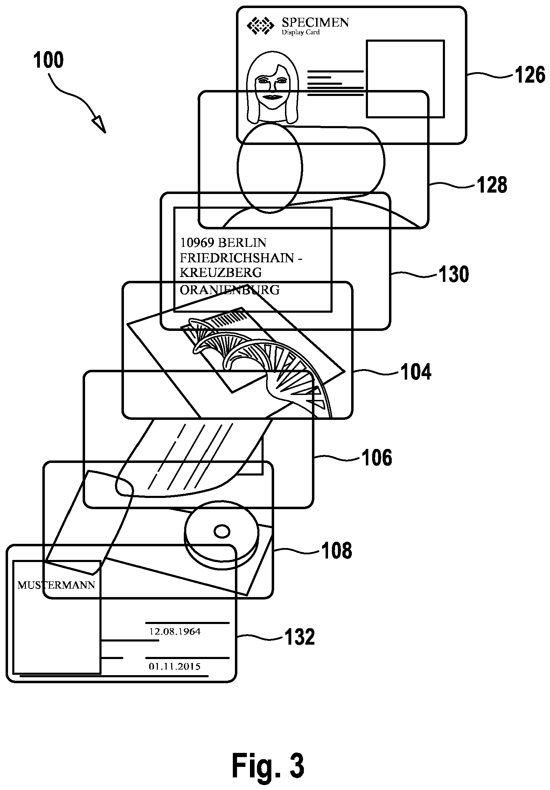

Die Figur 3 zeigt eine weitere Ausführungsform eines erfindungsgemäßen Dokuments 100. Neben den Dokumentenschichten 104, 106 und 108 (vergleiche Ausführungsformen der Figuren 1 und 2) hat das Dokument hier weiter Dokumentenschichten 126, 128, 130 und 132.

Die Dokumentenschicht 126 beinhaltet ein oder mehrere optische Sicherheitsmerkmale und kann drucktechnisch hergestellt werden. Insbesondere kann die Dokumentenschicht 126 personalisierte Informationen tragen.

Die Dokumentschicht 128 kann eine Anzeigevorrichtung, wie z. B. eine transparente OLED Anzeigevorrichtung aufweisen, und/oder ein Touchpad, insbesondere ein so genanntes Multi-Touch-Pad dass zwei oder mehr Finger gleichzeitig erfassen kann, und/oder eine weitere Erfassungseinheit zur Erfassung eines biometrischen Merkmals, wie z. B. einen Fingerabdrucksensor. Durch das Touchpad kann ein Manipulandum gebildet werden, über das ein Nutzer z. B. Kommandos in das Dokument 100 eingeben kann, wie z. B. um entlang einer auf der Anzeigevorrichtung dargestellten Bildsequenz zu navigieren.

Die Dokumentenschicht 130 kann eine weitere Anzeigvorrichtung beinhalten, die z. B. als bistabile Anzeigevorrichtung ausgebildet ist, insbesondere als so genanntes E-Paper.

Die Dokumentenschicht 104 kann so wie z. B. in der Ausführungsform der Figur 1 ausgebildet sein, d. h. die Erfassungseinheit 110 der Dokumentenschicht 104 kann als DNA-Mikro-TAS mit z. B. subkutaner Probenentnahme ausgebildet sein.

Die Dokumentenschicht 106 kann so wie in der Ausführungsform der Figur 1 ausgebildet sein, d. h. die Dokumentenschicht kann eine elektronische Schaltung beinhalten, wie z. B. einen Prozessor oder eine andere Logikschaltung um insbesondere die Auswertung der von den verschiedenen Erfassungseinheiten gelieferten biometrischen Daten vorzunehmen, die Funktion frei zu schalten und zu erbringen sowie die verschiedenen Anzeigevorrichtungen des Dokuments 100 anzusteuern, und eine Kommunikationsschnittstelle beispielsweise zu einem Lesegerät.

Die Dokumentenschicht 108 kann so wie bei der Ausführungsform der Figur 1 ausgebildet sein, d. h. die Erfassungseinheit 110 kann z. B. als eine elektronische Kamera, z.B. als ein Kamerachip ausgebildet sein. Ferner kann auf der Dokumentenschicht 108 eine elektronische Schaltung für das Powermanagement angeordnet sein, insbesondere um die elektronische Schaltung der Dokumentenschicht 106 vor Überspannungen zu schützen, die sich aus der induktiven Einkopplung von Energie ergeben können. Das Powermanagement kann insbesondere eine Schaltung zum Überspannungsschutz der elektronischen Schaltung der Dokumentenschicht 106 beinhalten.

Die Dokumentenschicht 132, welche unterhalb der Dokumentenschicht 108 angeordnet ist, kann ein Volumenhologramm mit steuerbaren optischen Linsen-Elementen aufweisen, wobei die Linsen-Elemente von der elektronischen Schaltung der Dokumentenschicht 106 ansteuerbar seien können. Das Volumenhologramm kann vor dem Kamerachip angeordnet sein, sodass sich die optischen Eigenschaften der Kamera durch Ansteuerung der optischen Elemente variieren lassen, beispielsweise für eine Nahaufnahme zur Aufnahe eines Fingerabdrucks bzw. für eine Portraitaufnahme zur Erfassung von Gesichtsbiometriedaten.

### Bezugszeichenliste

- 100: Dokument
- 102: Dokumentenkörper
- 104: Dokumentenschicht
- 106: Dokumentenschicht
- 108: Dokumentenschicht
- 110: Erfassungseinheit
- 112: Via
- 114: Auswertungsmodul
- 116: Funktionsmodul
- 118: Speicher
- 120: Kommunikationsschnittstelle
- 122: Erfassungseinheit
- 124: Via
- 126: Dokumentenschicht
- 128: Dokumentenschicht
- 130: Dokumentenschicht
- 132: Dokumentenschicht

## Patentansprüche

1. Dokument mit einem Dokumentenkörper (102), der durch mehrere übereinander angeordnete Dokumentenschichten (104, 106, 108; 126, 128, 130, 104, 106, 108, 132) gebildet wird, wobei eine erste (106) der Dokumentenschichten eine Auswerteeinheit (114) beinhaltet, eine zweite (104) der Dokumentenschichten eine erste Erfassungseinheit (110) zur Erfassung erster biometrischer Daten beinhaltet, eine dritte (108) der Dokumentenschichten eine zweite Erfassungseinheit (122) zur Erfassung von zweiten biometrischen Daten beinhaltet, und wobei die Auswerteeinheit mit den zumindest ersten und zweiten Erfassungseinheiten verbunden ist, um zumindest die ersten und zweiten biometrischen Daten von den Erfassungseinheiten zu empfangen, wobei die Auswerteeinheit zur Auswertung der von den ersten und zweiten Erfassungseinheiten gelieferten ersten und zweiten biometrischen Daten ausgebildet ist, um in Abhängigkeit eines Ergebnisses der Auswertung eine Funktion (116) des Dokuments frei zuschalten, und wobei das Dokument mit einem ersten Speicherbereich zur Speicherung erster Referenzdaten für die ersten biometrischen Daten und mit einem zweiten Speicherbereich zur Speicherung zweiter Referenzdaten für die zweiten biometrischen Daten versehen ist, **dadurch gekennzeichnet, dass** die Auswerteeinheit so ausgebildet ist, dass ein erster Konfidenzwert aus den ersten Referenzdaten und den ersten biometrischen Daten ermittelt wird, und dass ein zweiter Konfidenzwert aus den zweiten Referenzdaten und zweiten biometrischen Daten ermittelt wird, dass die Auswerteeinheit so ausgebildet ist, dass die Funktion frei geschaltet wird, wenn einer der ersten und zweiten Konfidenzwerte über einem ersten Schwellwert liegt, und dass die Auswerteeinheit so ausgebildet ist, dass die Funktion frei geschaltet wird, wenn das Ergebnis einer Rechenoperation, in die die ersten und zweiten Konfdenzwerte eingehen, über einem zweiten Schwellwert liegt.

2. Dokument nach Anspruch 1, wobei es sich bei den ersten und zweiten biometrischen Daten um unterschiedliche Typen biometrischer Daten handelt.

3. Dokument nach Anspruch 2, wobei es sich bei den ersten oder den zweiten biometrischen Daten um einen der folgenden Typen biometrischer Daten handelt: Fingerabdruckdaten, Irisscandaten, Gesichtsbiometriedaten, genetische Daten, insbesondere DNA Sequenz-Daten.

4. Dokument nach einem der vorhergehenden Ansprüche, wobei es sich bei der Rechenoperation um eine Linearkombination der ersten und zweiten Konfidenzwerten handelt.

5. Dokument nach einem der vorhergehenden Ansprüche mit einem elektronischen Speicher (118) zur Speicherung von schutzbedürftigen Daten und einer Schnittstelle (120) zur Ausgabe der schutzbedürftigen Daten, wobei es sich bei der Funktion um die Durchführung eines Lesezugriffs auf die schutzbedürftigen Daten handelt, und wobei die Auswerteeinheit zur Durchführung eines kryptographischen Verfahrens zum Schutz der schutzbedürftigen Daten ausgebildet ist, wobei eine notwendige Bedingung zum Ausgabe der schutzbedürftigen Daten über die Schnittstelle ist, dass die ersten und zweiten biometrischen Daten ein durch die Auswertung zu überprüfendes vorgegebenes Kriterium erfüllen.

6. Dokument nach einem der vorhergehenden Ansprüche, wobei zumindest eine vierte (106, 128, 130) der Dokumentenschichten eine Anzeigevorrichtung (120) beinhaltet, die mit der Auswerteeinheit verbunden ist, sodass die Auswerteeinheit die Anzeigevorrichtung ansteuern kann.

7. Dokument nach Anspruch 5 und 6, wobei die Auswerteeinheit so ausgebildet ist, dass die Anzeigevorrichtung zur Anzeige zumindest eines Teils der schutzbedürftigen Daten angesteuert wird, nachdem die Funktion frei geschaltet worden ist.

8. Dokument nach einem der vorhergehenden Ansprüche mit Mitteln zur induktiven Einkopplung von elektrischer Energie zur Spannungsversorgung zumindest der Auswerteeinheit.

9. Dokument nach einem der vorhergehenden Ansprüche, wobei die erste Erfassungseinheit als elektronische Kamera ausgebildet ist.

10. Dokument nach Anspruch 9, mit einem Volumenhologramm mit steuerbaren optischen Linsen-Elementen, wobei das Volumenhologramm in einem Strahlengang der elektronischen Kamera angeordnet ist, wobei das Volumenhologramm von der Auswerteeinheit ansteuerbar ist.

11. Dokument nach einem der vorgehenden Ansprüche, wobei zumindest eine fünfte (126) der Dokumentenschichten ein optisches Sicherheitsmerkmal beinhaltet.

## Claims

1. A document comprising a document body (102) which is formed by a plurality of document layers (104, 106, 108; 126, 128, 130, 104, 106, 108, 132) arranged on top of each other, wherein a first layer (106) of the document layers contains an evaluation unit (114), a second layer (104) of the document layers contains a first acquisition unit (110) for collecting a first set of biometric data, a third layer (108) of the document layers contains a second acquisition unit (122) for collecting a second set of biometric data, and wherein the evaluation unit is connected to the at least first and second acquisition units in order to receive at least the first and second sets of biometric data from the acquisition units, wherein the evaluation unit is configured to evaluate the first and second sets of biometric data supplied from the first and second acquisition units in order to activate a function (116) of the document depending on a result of the evaluation, and wherein the document is provided with a first memory region for storing a first set of reference data for the first set of biometric data and with a second memory region for storing a second set of reference data for the second set of biometric data, **characterised in that** the evaluation unit is configured such that a first confidence value is determined from the first set of reference data and the first set of biometric data, and such that a second confidence value is determined from the second set of reference data and the second set of biometric data, **in that** the evaluation unit is configured such that the function is activated if one of the first and second confidence values lies above a first threshold value, and **in that** the evaluation unit is designed such that the function is activated if the result of a calculation operation into which the first and second confidence values are input lies above a second threshold value.

2. The document according to claim 1, wherein the first and second sets of biometric data involve different types of biometric data.

3. The document according to claim 2, wherein the first or the second set of biometric data is one of the following types of biometric data: fingerprint data, iris scan data, facial biometric data, or genetic data, in particular DNA sequence data.

4. The document according to any one of the preceding claims, wherein the calculation operation is a linear combination of the first and second confidence values.

5. The document according to any one of the preceding claims, comprising an electronic memory (118) for storing sensitive data and an interface (120) for outputting the sensitive data, wherein the function involves the execution of a read access on the sensitive data, and wherein the evaluation unit is configured to perform a cryptographic process for protecting the sensitive data, wherein a necessary requirement for outputting the sensitive data via the interface is that the first and second sets of biometric data fulfil a predetermined criterion which is to be checked by the evaluation.

6. The document according to any one of the preceding claims, wherein at least a fourth layer (106, 128, 130) of the document layers contains a display device (120) which is connected to the evaluation unit such that the evaluation unit can control the display device.

7. The document according to claim 5 and 6, wherein the evaluation unit is configured such that the display device is controlled to display at least a part of the sensitive data after the function has been activated.

8. The document according to any one of the preceding claims, comprising means for providing inductive coupling of electrical energy to the power supply of at least the evaluation unit.

9. The document according to any one of the preceding claims, wherein the first acquisition unit is configured as an electronic camera.

10. The document according to claim 9, comprising a volume hologram with controllable optical lens elements, wherein the volume hologram is arranged in an optical path of the electronic camera, wherein the volume hologram can be controlled by the evaluation unit.

11. The document according to any one of the preceding claims, wherein at least a fifth layer (126) of the document layers contains an optical security feature.

## Revendications

1. Document avec un corps de document (102), qui est formé par plusieurs couches de documents (104, 106, 108 ; 126, 128, 130, 104, 106, 108, 132) disposées les unes sur les autres, où une première (106) des couches de documents contient une unité d'évaluation (114), une deuxième (104) des couches de documents contient une première unité de saisie (110) pour la saisie de premières données biométriques, une troisième (108) des couches de document contient une deuxième unité de saisie (122) pour la saisie de deuxièmes données biométriques, et où l'unité d'évaluation est reliée avec les au moins première et deuxième unités de saisie afin de réceptionner au moins les premières et deuxièmes données biométriques des unités de saisie, où l'unité d'évaluation est conçue pour l'évaluation des premières et deuxièmes données biométriques délivrées par les première et deuxième unités de saisie, afin d'activer une fonction (116) du document en fonction d'un résultat de l'évaluation, et où le document est muni d'une première zone de mémoire pour le stockage de premières données de référence pour les premières données biométriques et d'une deuxième zone de mémoire pour le stockage de deuxièmes données de référence pour les deuxièmes données biométriques, **caractérisé en ce que** l'unité d'évaluation est conçue de sorte qu'une première valeur de confiance est déterminée à partir des premières données de référence et des premières données biométriques, et qu'une deuxième valeur de confiance est déterminée à partir des deuxièmes données de références et des deuxièmes données biométriques,
que l'unité d'évaluation est conçue de telle manière que la fonction est activée lorsque que l'une des première et deuxième valeurs de confiance se situe au dessus d'une première valeur de seuil, et que l'unité d'évaluation est conçue de telle manière que la fonction est activée lorsque le résultat d'une opération de recherche dans laquelle sont impliquées les première et deuxième valeurs de confiance se situe au dessus d'une deuxième valeur de seuil.

2. Document selon la revendication 1, où, dans le cas des premières et des deuxièmes données biométriques, il s'agit de divers types de données biométriques.

3. Document selon la revendication 2, où, dans le cas des premières et deuxièmes données biométriques, il s'agit de l'un des types de données biométriques suivants : données d'empreintes digitales, données de numérisation d'iris, données biométriques faciales, données génétiques, notamment données de séquences d'ADN.

4. Document selon l'une des revendications précédentes, où, dans le cas de l'opération de recherche, il s'agit d'une combinaison linéaire des première et deuxième valeurs de confiance.

5. Document selon l'une des revendications précédentes avec une mémoire (118) électronique pour le stockage de données vulnérables et une interface (120) pour la délivrance de données vulnérables, où, dans le cas de la fonction, il s'agit de l'exécution d'un accès en lecture des données vulnérables et où l'unité d'évaluation est conçue pour l'exécution d'un procédé cryptographique pour la protection des données vulnérables, où une condition nécessaire pour la délivrance des données vulnérables par l'intermédiaire de l'interface est que les premières et deuxièmes données biométriques satisfont à un critère prédéfini à vérifier par l'évaluation.

6. Document selon l'une des revendications précédentes, où au moins une quatrième (106, 128, 130) des couches de documents contient un dispositif d'affichage (120) qui est relié avec l'unité d'évaluation, de sorte que l'unité d'évaluation peut démarrer la commande du dispositif d'affichage.

7. Document selon les revendications 5 et 6, où l'unité d'évaluation est conçue de telle manière que le dispositif d'affichage est démarré pour l'affichage d'au moins une partie des données vulnérables après que la fonction ait été activée.

8. Document selon l'une des revendications précédentes avec des moyens pour le couplage inductif d'énergie électrique pour l'alimentation en tension d'au moins l'unité d'évaluation.

9. Document selon l'une des revendications précédentes, où la première unité de saisie est conçue sous la forme d'une caméra électronique.

10. Document selon la revendication 9, avec un hologramme de volume avec des éléments de lentilles optiques pouvant être commandés, où l'hologramme de volume est disposé dans une trajectoire de faisceau de la caméra électronique, où l'hologramme de volume peut être commandé par l'unité d'évaluation.

11. Document selon l'une des revendications précédentes, où au moins une cinquième (126) des couches de documents contient une caractéristique de sécurité optique.
